# EUROPEAN PATENT SPECIFICATION

(11) **EP 2 371 098 B1**
(45) Date of publication and mention of the grant of the patent: **14.01.2015**
(21) Application number: 09798966.9
(22) Date of filing: 11.12.2009
(51) Int. Cl.: H04W 88/18, H04W 8/10, H04W 8/28, H04W 8/18, H04L 12/58

(54) **SUBSCRIBER PROVISIONING METHOD AND SYSTEM**
TEILNEHMERBEREITSTELLUNGSVERFAHREN UND SYSTEM
PROCÉDÉ ET SYSTÈME D APPROVISIONNEMENT D'ABONNÉ

(30) Priority: 12.12.2008 US 193653 P
(43) Date of publication of application: 05.10.2011
(73) Proprietor: Markport Limited, Dublin 2 (IE)
(72) Inventor: BERGINK, Martin, 7491 JA Delden (NL); RUITER, Johan, 2584 CK The Hague (NL); WIJBRANS, Klaas, 5121 MV Rijen (NL)
(74) Representative: Weldon, Michael James
(86) International application number: PCT/IE2009/000089
(87) International publication number: WO 2010/067343

(56) References cited:
- US-A1- 2004 082 332
- US-A1- 2005 108 334
- NOKIA SIEMENS NETWORKS: "SMS Router Optimization" 3GPP DRAFT; C1-073119-SMS-ROUTER-OPT-23040-701, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Sophia Antipolis, France; 20071112, 12 November 2007 (2007-11-12), XP050027272 [retrieved on 2007-11-12]
- NOKIA SIEMENS NETWORKS ET AL: "SMS Router Optimization" 3GPP DRAFT; C4-071874, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Sophia; 20071109, 9 November 2007 (2007-11-09), XP050038946 [retrieved on 2007-11-09]

## Description

### INTRODUCTION

### Field of the Invention

The invention relates to subscriber data management in a communications network.

A MMS notification should only be sent by an MMSC to devices which are capable of receiving MMS. In order to perform this check, at least the subscriber MMS device capability needs to be provisioned in a local subscriber database.

Once a provisioned subscriber ports out to another operator and an MMS is sent by a subscriber of the original operator, the recipient can receive the notification, but is not able anymore to retrieve the message, causing the message to expire.

US Patent Application Publication US2004/082332 A1 includes a porting control routing (PCR) node that is adapted to efficiently route signalling messages associated with a mobile subscriber that has been either ported into or out of a service provider's wireless communication network.

Such subscribers need to be de-provisioned from the local subscriber database in this situation. Depending on the de-provisioning method this creates issues such as additional integration complexity, and can cause provisioning inconsistencies and additional network load.

The invention is therefore directed towards achieving improved subscriber data management in communication networks.

**Glossary of terms and their definitions:**

| | |
|---|---|
| APN | - Access Point Name |
| EC | - Error Code |
| HLR | - Home Location Register |
| HSS | - Home Subscriber Register |
| IMSI | - International Mobile Subscriber identity |
| MCC | - Mobile Country Code |
| MMSC | - Multimedia Messaging Service Center |
| MNC | - Mobile Network Code |
| MVNO | - Mobile Virtual Network Operator |
| PBS | - Prepaid Billing System |
| PDU | - Protocol Data Unit |
| PPG | - Push Proxy Gateway |
| SMPP | - Short Message Peer-to-Peer protocol |
| SMS | - Short Message Service |
| SMSC | - Short Message Service Centre |
| SRI-SM | - Send Routing Information for Short Message |
| UCP | - Universal Computer Protocol |
| VAS | - Value Added Service, also known as 'Large Account' |
| WAP | - Wireless Application Protocol |

### SUMMARY OF THE INVENTION

According to the invention, there is provided a method for subscriber data management in a communications network according to appended claim 1.

In one embodiment, the information includes a HLR or HSS response to a routing request.

In one embodiment, the routing request is made by a message service centre such as an SMSC, MMSC, or SMS router.

In one embodiment, the routing request concerns attempted delivery of a multi-media message.

In one embodiment, the response is a delivery report.

In one embodiment, the modification is to automatically de-provision a subscriber.

In one embodiment, the modification is to automatically, re-provision the subscriber in a correct community, such as in an MVNO.

In one embodiment, the received information is in an error response of a billing system, or an error response on voicemail notification.

In one embodiment, the received information is incorporated in an MCC/MNC addition to an SMSC error report.

In one embodiment, an SMSC access protocol includes an operation for transporting routing information such as a country code, or a new network operator identifier to re-route a message such as an MM message.

In one embodiment, an SMSC access protocol is SMPP or UCP.

In one embodiment, the data management system transmits a request to the HLR or other database such as a number portability database to determine an address for re-routing a message.

In one embodiment, the data management system receives new routing information such as a country code, or a new network operator identifier to re-route a message such as an MM message.

In one embodiment, the new routing information is received from the notification server.

In another aspect, the invention provides a data management system according to appended claim 15.

In another aspect, the invention provides a computer program product according to appended claim 16.

### DETAILED DESCRIPTION OF THE INVENTION

### Brief Description of the Drawings

The invention will be more clearly understood from the following description of some embodiments thereof, given by way of example only with reference to the accompanying drawings in which:
Fig. 1(a) is a diagram showing the network elements involved in an automatic network maintenance method of the invention using the SMSC response without MCC/MNC and the MMSC performing a HLR lookup; and
Fig. 1(b) is a diagram showing the network elements involved in an automatic network maintenance method of the invention using the SMSC response without MCC/MNC and the auto-provisioning logic performing a HLR lookup;
Fig. 1(c) is a diagram showing the network elements involved in an automatic network maintenance method of the invention using a failure report of an SMSC including the MCC/MNC;
Fig. 1(d) is a diagram showing the network elements involved in an automatic network maintenance method of the invention using the response of a notification server/SMS router including the MCC/MNC;
Fig. 2 illustrates the method in more detail; and
Figs. 3 and 4 are flow diagrams illustrating an alternative embodiment of the method using the responses of a prepaid system.

### Description of the Embodiments

The invention provides a method which enables de-provisioning of subscribers and rerouting of an MMS, using the responses of external systems in the normal message flow of sending a MMS from the original network to an out ported subscriber.

Methods of the invention perform automatic maintenance of subscriber records in communication networks such as GSM mobile networks. The automatic performance is achieved by monitoring network signalling messages, processing them, and implementing subscriber database processing modifications.

In an important example, the method provides a reliable mechanism for detecting that a subscriber has ported out from a network.

The response on sending the SMS notification is used to de-provision and re-route an MMS. The method requests feedback from the SMSC on whether it was able to deliver the notification to the subscriber and based on that feedback takes the decision to de-provision the subscriber, or in the case of an MVNO that is hosted on the same system, re-provision the subscriber in the correct community.

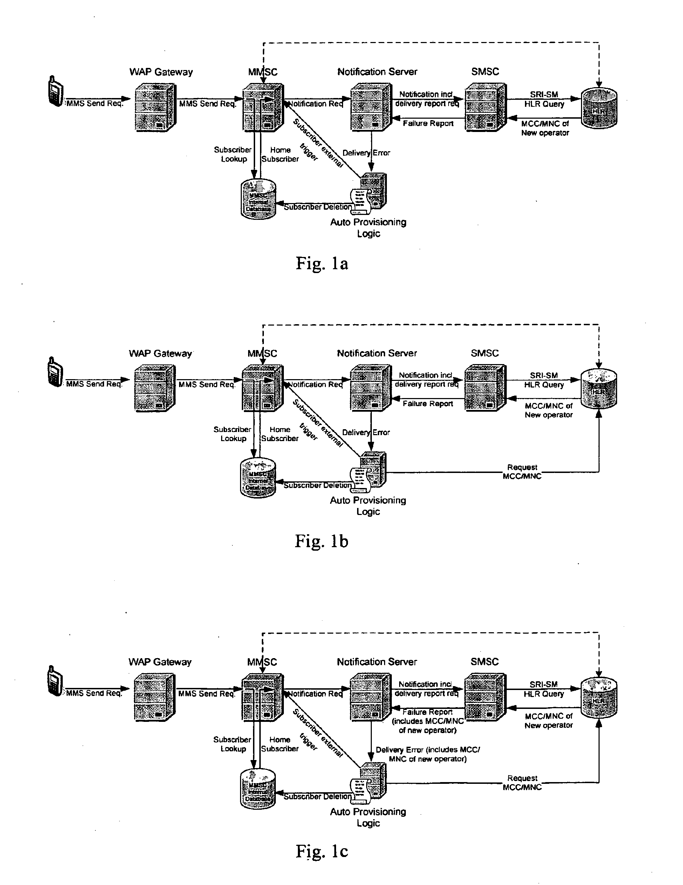

Referring to Fig 1(a), an SMSC large account, used by a notification server, is configured to only allow the addressing of home network users. This is known SMSC functionality that is realized by comparing the country and network codes in the IMSI returned by the SRI-SM response of the HLR with the home network codes. In the case of an out-ported destination subscriber, the SMS notification will not be delivered to the addressee. Instead, the SMSC generates a delivery receipt with an error indication that the subscriber is no longer addressable in the original network to the notification server. In this embodiment, the error indication does not include the MCC/MNC. In UCP the error indication 'Not delivered, unknown subscriber' is present in the EC field of the delivery notification PDU, in SMPP in the network_error_code field of the delivery receipt PDU. The existing SMSC functionality is specific for Value Added Services and indeed is mandatory in those countries where it is legally forbidden for VAS applications to send SMS messages to off-net subscribers.

The delivery report with this error message is used to trigger the removal of the ported-out subscriber from the MMSC's internal database. Upon message re-try, initiated by the subscriber external trigger to the MMSC, the MMSC will no longer be able to find the subscriber in its database and will use its routing logic to deliver the message, involving interaction with the HLR or its own routing tables.

Referring to Fig 1(b), because the delivery error returned by the notification server does not include the MCC/MNC the auto-provisioning logic queries the HLR via a direct signalling interface as to where the subscriber ported out to. This is because the currently standardized protocols for SMS do not provide the identification of the new operator. Such a request may be sent to a different database, such as a number portability database.

The existing protocols to the SMSC (currently UCP or SMPP) can be extended to directly provide the identification of the new operator including country code. In addition, this identification is passed in the subscriber external trigger to the MMSC, triggering the MMSC to attempt delivery (with the new operator identification including country code) by for example rerouting this MM message via the MM4 interface to the MMSC of the new operator or to a User Message Store, notifying the subscriber per-SMS.

Referring to Fig. 1(c), the SMSC sends a failure report including the MCC/MNC of the new operator which is forwarded to the auto-provisioning logic, which then decides on an action such as performing subscriber deletion, or re-provisioning for example where the other operator is a hosted MVNO. Also, it can trigger re-routing the message to an external operator.

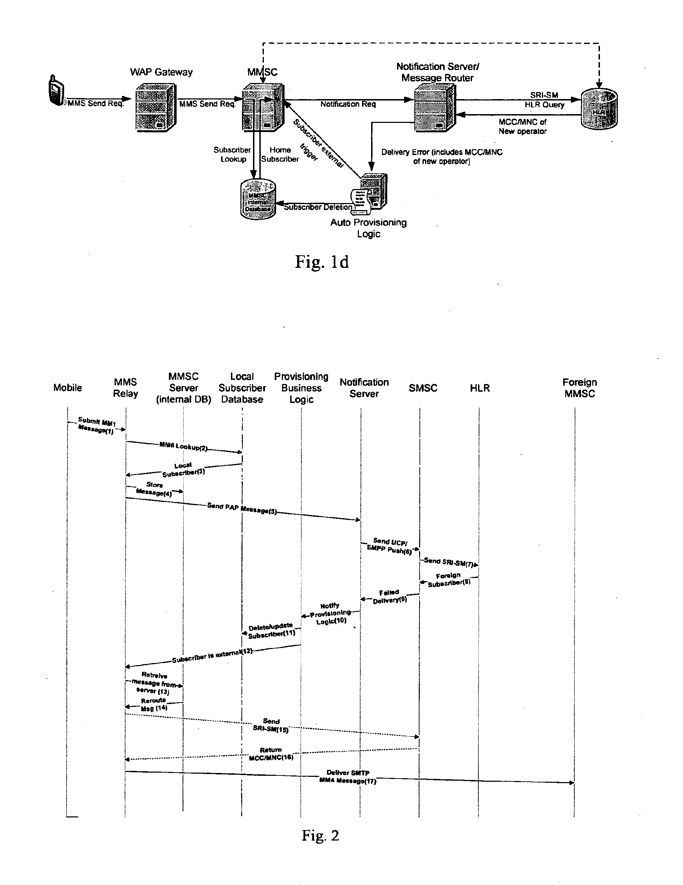

Referring to Fig 1(d) a combined notification server/SMS router directly delivers the SMS notification in the MMS protocol to the handset. In that case, the notification server/SMS router may do an HLR lookup and from that HLR lookup directly can determine that the subscriber no longer resides in this network and should be de-provisioned. Here, also the new operator identification can be provided to the provisioning logic to reroute the MM message. In this case, if there is a re-try, this is performed by the MMSC.

Referring to Fig. 2 a flow is depicted for an MMS sent from the original network to a subscriber who has been previously provisioned on the MMSC, has been ported out in the meantime, but with his provisioning information still remaining on the system. The flow corresponds to Figs. 1(a) to 1(d).
1. A mobile device submits a message to an out-ported subscriber using the MM1 HTTP interface.
2. The MMSC will do an LDAP Search Request for the recipient in the local subscriber database using the MM6 interface
3. The database will respond with a LDAP SearchResEntr, containing the subscriber info, even though he has been ported out.
4. The MMS Relay forwards this message to the MMS Server's internal database
5. The MMSC sends a PAP message towards the notification server in order to get the
notification sent out using...
6....the SMSC on UCP or SMPP protocol. The notification server will ask for a delivery
report.
7. In order to deliver the message, the SMSC (or message router) sends an SRI-SM query towards the HLR.
8. The HLR returns the new operator MCC and MNC for the ported-out subscriber, allowing the SMSC (or message router) to determine that the subscriber is no longer in the home network.
9. The SMSC (or message router), configured to only send to local subscribers, will send an error back (optionally including the MCC/MNC of the new operator) towards the notification server in response to the delivery report request.
10. The notification server (either stand-alone or co-hosted) forwards this to the provisioning business logic functions.
11. Based on the MCC/MNC combination the business logic can remove or update the subscriber via the MM6 interface, and also
12. ..inform the MMSC that the subscriber is ported out using SOAP over the trigger interface, including MCC/MNC. Example:

| |
|---|
| ```
 POST /mc_soap HTTP/1.1
 Content-Length: 463
 Content-Type: text/xml
 Host: MMSC:10025
 <env:Envelope xmlns:env="http://schemas.xmlsoap.org/soap/envelope/">
 <env:Body>
 <ControllerRequest
   xmlns=
      "http://www.acision.com/mmsc/messagetrigger/schema/REL-1-0-1">
      <RecipientAddress>31619800001</RecipientAddress>
      <Action>Reroute>
      <NewMCC>204</NewMCC>
      <NewMNC>02</NewMNC>
      </Action>
      </ControllerRequest>
      </env:Body>
      </env:Envelope>
``` |

13. The MMS Relay retrieves the original message from the internal database and reroutes the message.
14. The message is rerouted to be properly delivered,
15. Optionally corresponding to Fig 1(a), if the information forwarded in step 9 does not contain the MCC and MNC of the new operator, the MMSC will use the MM5 interface to do an HLR SRI/SM query to retrieve this information itself. As shown in Fig. 1 (b), this may be done by the auto-provisioning logic.
16. Based on the returned MCC/MNC a check is made as to who the new operator is, where the subscriber has ported to.
17. If inter-working agreements are in place, the message can be forwarded to the new operator's MMSC over SMTP using MM4 or delivered to the updated subscriber.

### Benefits

The de-provisioning of subscribers and message rerouting using the responses of external systems in the normal message flow has the benefit of:
- The MMSC can efficiently handle all messaging within the network without requiring an HLR lookup per recipient
- Not imposing extra signalling on the network but rather ensuring that only a single lookup is needed to either deliver the message or to detect that the specific recipient is no longer a subscriber. This advantageously leaves more HLR capacity for valuable services such as handling subscriber routing information requests that result in normal delivery of messages.
- Network operation efficiency is improved due to reduction of database indexes and shorter fetch cycle times.
- Simplifying the de-provisioning process/architecture and preventing provisioning inconsistencies, improving network operation efficiency due to reduction of database indexes and shorter fetch cycle times.
- De-provisioning performed automatically using a standardized interface requires less integration customization into the operator network.
- Services, other than MMS, like speed browsing, SMS, voicemail and instant messaging can also be de- or re-provisioned on the same trigger. The advantage of this is that these other services also no longer need to depend on the 'regular cleanup' but instead are de-provisioned the moment it is detected that the subscriber is ported out.
- In an alternative embodiment, a voicemail system can detect if a subscriber has ported out based on a response to an SMS notification. By providing early detection of ported-out subscribers on, for example, voicemail the method facilitates additional services such as the forwarding of the existing voice mail messages to the subscriber at the new operator, with for example use of the VPIM v2 voice profile. This is a specific MIME message format for voice mail that can be sent via SMTP towards the new operator.

### Alternative Embodiment

In an alternative embodiment, instead of a notification server that sends the SMS directly to the phone, an existing Push Proxy Gateway may be used. This provides the ability to use both IP notifications and legacy SMS notifications. A requirement is that the Push Proxy Gateway is able to detect whether a subscriber is no longer resident with the operator and can respond with a specific error code indicating that the recipient has ported out. The notification server on the MMSC then just intercepts this response and uses it to initiate the subscriber de-provisioning action.

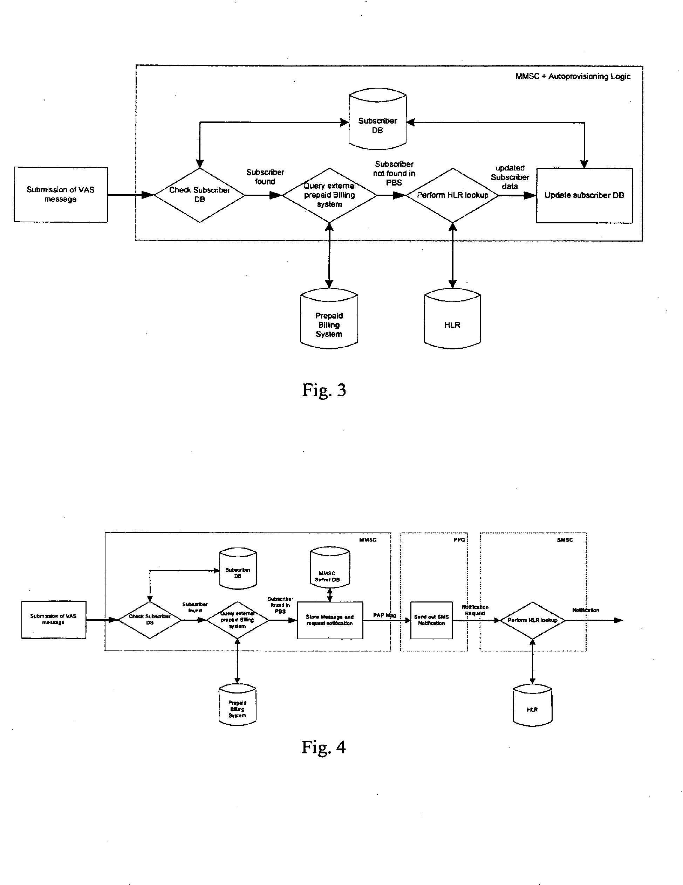

When a VAS application sends a message to the ported-out subscriber, where the recipient is charged, a Prepaid Billing System that is maintained by the original operator and from which the subscriber has been removed will return an error before the message is accepted by the MMSC. This error can also be used to de-provision the subscriber. As the Prepaid system is not aware of the new operator, a separate HLR query is needed to check if the subscriber has to be re-provisioned. The flow is depicted in Fig. 3. In Fig. 4 the normal flow where the subscriber has not been out ported is shown to illustrate the difference.

In addition, the procedure described here is not only applicable to the multimedia messaging service, but can be extended to any system with a subscriber database sending notifications over SMS as part of its protocol implementation. The approach thus is also feasible for SMS Centers, WAP gateways and Push Proxy Gateways sending WAP push message over the SMS bearer, and Mobile E-mail systems that send notifications over the SMS bearer.

The invention is not limited to the embodiments described but may be varied in construction and detail.

## Claims

1. A method for subscriber data management in a communications network, the method comprising the step of a data management system receiving (10) information from signalling flows and automatically acting upon this information to modify (11) subscriber data in a database,
wherein the information concerns message delivery operations, and
wherein a notification server, upon receipt of a response (9) from a message service centre, transmits a message (10) containing said information to the data management system.

2. A method as claimed in claim 1, wherein the information (10) includes a HLR or HSS response to a routing request.

3. A method as claimed in claim 2, wherein the routing request (7) is made by a message service centre such as an SMSC, MMSC, or SMS router.

4. A method as claimed in claim 3, wherein the routing request (7) concerns attempted delivery of a multi-media message.

5. A method as claimed in any preceding claim, wherein the response (9) is a delivery report.

6. A method as claimed in any preceding claim, wherein the modification (11) is to automatically de-provision a subscriber.

7. A method as claimed in any claim of claims 1 to 5, wherein the modification is to automatically, re-provision the subscriber in a correct community, such as in an MVNO.

8. A method as claimed in any preceding claim, wherein the received information is in an error response of a billing system, or an error response on voicemail notification.

9. A method as claimed in any preceding claim, wherein the received information is incorporated in an MCC/MNC addition to an SMSC error report.

10. A method as claimed in claim 9, wherein an SMSC access protocol includes an operation for transporting routing information such as a country code, or a new network operator identifier to re-route a message such as an MM message.

11. A method as claimed in claim 10, wherein an SMSC access protocol is SMPP or UCP.

12. A method as claimed in any preceding claim, wherein the data management system transmits a request (15) to the HLR or other database such as a number portability database to determine an address for re-routing a message.

13. A method as claimed in any preceding claim, wherein the data management system receives (16) new routing information such as a country code, or a new network operator identifier to re-route a message such as an MM message.

14. A method as claimed in claim 13, wherein the new routing information is received from the notification server.

15. A data management system comprising means for performing operations of a method of any preceding claim, the system including a notification server for delivering notifications for message delivery.

16. A computer program product comprising a computer readable medium containing software code for performing operations of a method of any of claims 1 to 14 when executing on a digital processor.

## Patentansprüche

1. Verfahren für Teilnehmerdatenmanagement in einem Kommunikationsnetz, wobei das Verfahren den Schritt beinhaltet, dass ein Datenmanagmentsystem Informationen von Signalströmen empfängt (10) und auf diese Informationen automatisch reagiert, um Teilnehmerdaten in einer Datenbank zu modifizieren (11),
wobei die Informationen Nachrichtenlieferoperationen betreffen, und
wobei ein Benachrichtigungsserver nach dem Erhalt einer Antwort (9) von einer Nachrichtendienstezentrale eine die genannten Informationen enthaltende Nachricht (10) zu dem Datenmanagementsystem überträgt.

2. Verfahren nach Anspruch 1, wobei die Informationen (10) eine HLR- oder HSS-Antwort auf eine Routing-Anforderung beinhalten.

3. Verfahren nach Anspruch 2, wobei die Routing-Anforderung (7) von einer Nachrichtendienstezentrale wie einem SMSC-, MMSC- oder SMS-Router verfasst wird.

4. Verfahren nach Anspruch 3, wobei die Routing-Anforderung (7) eine versuchte Lieferung einer Multimedia-Nachricht betrifft.

5. Verfahren nach einem vorherigen Anspruch, wobei die Antwort (9) ein Lieferbericht ist.

6. Verfahren nach einem vorherigen Anspruch, wobei die Modifikation (11) darin besteht, einen Teilnehmer automatisch zu deprovisionieren.

7. Verfahren nach einem der Ansprüche 1 bis 5, wobei die Modifikation darin besteht, den Teilnehmer in einer korrekten Gemeinschaft wie z.B. in einer MVNO automatisch neu zu provisionieren.

8. Verfahren nach einem vorherigen Anspruch, wobei sich die empfangenen Informationen in einer Fehlerantwort eines Abrechnungssystems oder in einer Fehlerantwort einer Voicemail-Benachrichtigung befinden.

9. Verfahren nach einem vorherigen Anspruch, wobei die erhaltenen Informationen in einem MCC/MNC-Zusatz zu einem SMSC-Fehlerbericht integriert sind.

10. Verfahren nach Anspruch 9, wobei ein SMSC-Zugangsprotokoll einen Vorgang zum Transportieren von Routing-Informationen wie z.B. einen Ländercode oder eine neue Netzbetreiberkennung zum Umleiten einer Nachricht wie z.B. einer MM-Nachricht beinhaltet.

11. Verfahren nach Anspruch 10, wobei ein SMSC-Zugangsprotokoll SMPP oder UCP ist.

12. Verfahren nach einem vorherigen Anspruch, wobei das Datenmanagementsystem eine Anforderung (15) zum HLR oder zu einer anderen Datenbank wie z.B. einer Nummernübertragbarkeitsdatenbank zum Ermitteln einer Adresse zum Umleiten einer Nachricht sendet.

13. Verfahren nach einem vorherigen Anspruch, wobei das Datenmanagementsystem neue Routing-Informationen wie z.B. einen Ländercode oder eine neue Netzbetreiberkennung zum Umleiten einer Nachricht wie z.B. einer MM-Nachricht empfängt (16).

14. Verfahren nach Anspruch 13, wobei die neuen Routing-Informationen von dem Benachrichtigungsserver empfangen werden.

15. Datenmanagementsystem, das Mittel zum Durchführen von Operationen eines Verfahrens nach einem vorherigen Anspruch umfasst, wobei das System einen Benachrichtigungsserver zum Liefern von Benachrichtigungen für Nachrichtenlieferung beinhaltet.

16. Computerprogrammprodukt, das ein computerlesbares Medium umfasst, das Software-Code zum Ausführen von Operationen eines Verfahrens nach einem der Ansprüche 1 bis 14 bei Ausführung auf einem digitalen Prozessor enthält.

## Revendications

1. Un procédé de gestion de données d'abonné dans un réseau de communication, le procédé comprenant l'opération de réception (10) par un système de gestion de données d'informations provenant de flux de signalisation et d'une action automatique sur ces informations de façon à modifier (11) des données d'abonné dans une base de données,
où les informations concernent des opérations de remise de messages, et
où un serveur de notification, dès réception d'une réponse (9) provenant d'un centre de service de messages, transmet un message (10) contenant lesdites informations au système de gestion de données.

2. Un procédé selon la Revendication 1, où les informations (10) comprennent une réponse HLR ou HSS à une demande d'acheminement.

3. Un procédé selon la Revendication 2, où la demande d'acheminement (7) est effectuée par un centre de service de messages tel qu'un routeur SMSC, MMSC ou SMS.

4. Un procédé selon la Revendication 3, où la demande d'acheminement (7) concerne une tentative de remise d'un message multimédia.

5. Un procédé selon l'une quelconque des Revendications précédentes, où la réponse (9) est un rapport de remise.

6. Un procédé selon l'une quelconque des Revendications précédentes, où la modification (11) consiste à dé-desservir automatiquement un abonné.

7. Un procédé selon l'une quelconque des Revendications 1 à 5, où la modification consiste à re-desservir automatiquement l'abonné dans une communauté correcte, telle que chez un MVNO.

8. Un procédé selon l'une quelconque des Revendications précédentes, où les informations reçues se trouvent dans une réponse d'erreur d'un système de facturation ou dans une réponse d'erreur d'une notification de courrier vocal.

9. Un procédé selon l'une quelconque des Revendications précédentes, où les informations reçues sont incorporées dans un ajout MCC/MNC à un rapport d'erreur SMSC.

10. Un procédé selon la Revendication 9, où un protocole d'accès SMSC comprend une opération de transport d'informations d'acheminement telles qu'un code de pays ou un nouvel identifiant d'opérateur de réseau de façon à réacheminer un message tel qu'un message MM.

11. Un procédé selon la Revendication 10, où un protocole d'accès SMSC est SMPP ou UCP.

12. Un procédé selon l'une quelconque des Revendications précédentes, où le système de gestion de données transmet une demande (15) au HLR ou à une autre base de données telle qu'une base de données de portabilité de numéro de façon à déterminer une adresse pour le réacheminement d'un message.

13. Un procédé selon l'une quelconque des Revendications précédentes, où le système de gestion de données reçoit (16) de nouvelles informations d'acheminement telles qu'un code de pays ou un nouvel identifiant d'opérateur de réseau de façon à réacheminer un message tel qu'un message MM.

14. Un procédé selon la Revendication 13, où les nouvelles informations d'acheminement sont reçues à partir du serveur de notification.

15. Un système de gestion de données comprenant un moyen d'exécution d'opérations d'un procédé selon l'une quelconque des Revendications précédentes, le système comprenant un serveur de notification destiné à la remise de notifications pour une remise de messages.

16. Un produit de programme informatique comprenant un support lisible par ordinateur contenant du code logiciel destiné à l'exécution d'opérations d'un procédé selon l'une quelconque des Revendications 1 à 14 lorsqu'il est exécuté sur un processeur numérique.
